# EUROPÄISCHE PATENTSCHRIFT

(11) **EP 1 530 152 B1**
(45) Veröffentlichungstag und Bekanntmachung des Hinweises auf die Patenterteilung: **26.12.2007**
(21) Anmeldenummer: 04025125.8
(22) Anmeldetag: 22.10.2004
(51) Int. Cl.: G06K 19/07, H04Q 7/32

(54) **Verfahren zum Betreiben eines tragbaren Datenträgers**
Method of operating a portable data carrier
Procédé pour faire fonctionner un support de données portable

(30) Priorität: 06.11.2003 DE 10351745
(43) Veröffentlichungstag der Anmeldung: 11.05.2005
(73) Patentinhaber: Giesecke & Devrient GmbH, 81677 München (DE)
(72) Erfinder: Rankl, Wolfgang, 81825 München (DE)
(74) Vertreter: Klunker, Hans-Friedrich

(56) Entgegenhaltungen:
- EP-A- 1 109 129
- US-A1- 2003 032 408

## Beschreibung

Die Erfindung betrifft ein Verfahren zum Betreiben eines tragbaren Datenträgers. Weiterhin betrifft die Erfindung ein System mit mehreren tragbaren Datenträgern.

Bei vielen Einsatzgebieten von tragbaren Datenträgern ist eine hohe Zuverlässigkeit des tragbaren Datenträgers von großer Bedeutung. So kann beispielsweise ein Ausfall eines als bargeldloses Zahlungsmittel oder als Sicherheitsmodul für ein Mobiltelefon ausgebildeten tragbaren Datenträgers zu erheblichen Unannehmlichkeiten für dessen Inhaber führen. Ein Ausfall oder eine Funktionseinschränkung des tragbaren Datenträgers kann beispielsweise durch die endliche Lebensdauer eines auf dem tragbaren Datenträger angeordneten EEPROMS hervorgerufen werden. Ein EEPROM ist nur für eine bestimmte Zahl von Zugriffen ausgelegt. Wird diese Zahl überschritten, so steigt die Wahrscheinlichkeit, daß ein Fehler auftritt, stark an. Ebenso können auch Fehler beim Prozessor oder Coprozessor des tragbaren Datenträgers eine Funktionseinschränkung oder einen Ausfall hervorrufen. Da die bei einem tragbaren Datenträger auftretenden Fehler häufig auf Alterungserscheinungen zurückzuführen sind, ist es bei manchen Anwendungen vorgesehen, den tragbaren Datenträger regelmäßig gegen einen neuen auszutauschen. Allerdings hängt das Ausfallrisiko des tragbaren Datenträgers in erster Linie nicht von seinem absoluten Alter ab, sondern von der tatsächlichen Betriebsdauer und insbesondere auch von der Art des Betriebs ab. So führt beispielsweise ein Betrieb mit häufigen Zugriffen auf das EEPROM zu einer schnellen Alterung des EEPROMS. Dies hat zur Folge, daß der regelmäßige Austausch des tragbaren Datenträgers bei einer intensiven Nutzung möglicherweise zu spät und bei einer geringen Nutzung unnötig früh erfolgt.

US 6,641,045 B1 (EP 1109129 A2) zeigt einen tragbaren Datenträger mit Selbstdiagnosefunktion. Der tragbare Datenträger ist über eine Datenträgerschnittstelle mit einem lokalen Endgerät verbunden und führt eine Selbstdiagnose aus. Im Falle eines Fehlers gibt der tragbare Datenträger eine Statusinformation aus, die lokal in der Datenträgerschnittstelle bzw. dem Endgerät vorliegt.

Ein Selbstdiagnoseverfahren für IC-Kartenleser ist in JP 2003 242452 A gezeigt. Der IC-Kartenleser ist angepaßt mit der IC-Karte zu kommunizieren und die Kommunikationsergebnisse an ein Endgerät, das als "Host Device" bezeichnet wird, zu übertragen. In dem System aus Kartenleser, Karte und Endgerät wird bestimmt, ob die Kommunikation mit der Karte normal verläuft und das entsprechende Ergebnis abgespeichert.

Aus der Anmeldung US 2003/0032408 A1 ist es bekannt, in einem Mobilfunkgerät auftretende Fehler zu erfassen und über ein Mobilfunknetz an einen zentralen Server zu übermitteln.

Eine andersartige Vorgehensweise zur Verhinderung der mit dem unerwarteten Ausfall eines tragbaren Datenträgers einhergehenden Probleme ist aus der JP 61080483 A bekannt Dort wird vorgeschlagen, bei einer Chipkarte eine Selbstdiagnose durchzuführen. Die Selbstdiagnose wird nur dann durchgeführt, wenn die Chipkarte nicht mit einer Transaktionseinrichtung verbunden ist. Abhängig davon, ob eine derartige Verbindung besteht, weist ein Signal entweder einen hohen oder einen niedrigen Pegel auf. Wenn die Chipkarte von der Transaktionseinrichtung getrennt wird, wird das Signal auf den hohen Pegel gesetzt, wobei eine Solarzelle der Chipkarte eine entsprechende Spannung erzeugt. Veranlasst durch den hohen Pegel des Signals wird ein in einem Speicher der Chipkarte abgelegtes Selbstdiagnoseprogramm ausgeführt. Im Rahmen der Selbstdiagnose wird geprüft, ob jeder einzelne Befehl des Mikroprozessors der Chipkarte korrekt abgearbeitet wird. Falls ein Fehler auftritt, wird eine Anzeigeeinrichtung aktiviert, um den Fehler anzuzeigen.

Die bekannte Vorgehensweise zur Selbstdiagnose der Chipkarte hat den Nachteil, daß die Chipkarte über eine Solarzelle oder eine andere Spannungsquelle verfügen muss, damit die Selbstdiagnose durchgeführt werden kann. Ein weiterer Nachteil besteht darin, daß die Hardware der Chipkarte durch die Selbstdiagnose zusätzlich belastet wird. Dadurch wird insbesondere die Lebensdauer von Hardware-Komponenten verkürzt, die lediglich für eine bestimmte Zahl von Zugriffen ausgelegt sind, wie dies beispielsweise bei einem EEPROM der Fall ist.

Der Erfindung liegt die Aufgabe zugrunde, einen störungsfreien Betrieb eines tragbaren Datenträgers über einen möglichst langen Zeitraum sicherzustellen.

Diese Aufgabe wird gelöst durch ein Verfahren mit der Merkmalskombination des Anspruchs 1 und ein System nach Anspruch 14.

Die Erfindung bezieht sich auf ein Verfahren zum Betreiben eines tragbaren Datenträgers, der einen integrierten Schaltkreis zur Speicherung und/oder Verarbeitung von Daten aufweist und über ein Netzwerk wenigstens zeitweise mit einer zentralen Einrichtung in Datenverbindung steht. Das erfindungsgemäße Verfahren zeichnet sich dadurch aus, daß der zentralen Einrichtung vom tragbaren Datenträger über das Netzwerk Informationen bezüglich des Funktionszustands des integrierten Schaltkreises übermittelt werden.

Die Erfindung hat den Vorteil, daß der zentralen Einrichtung der Funktionszustand des tragbaren Datenträgers bekannt ist. Dadurch besteht die Möglichkeit, eine sich anbahnende Funktionsbeeinträchtigung des tragbaren Datenträgers rechtzeitig zu erkennen und geeignete Gegenmaßnahmen einzuleiten. Auf einen in regelmäßigen Zeitabständen durchgeführten Austausch des tragbaren Datenträgers kann somit verzichtet werden und der Austausch stattdessen am tatsächlichen Bedarf orientiert werden. Dies hat den Vorteil, daß ein unnötiger Austausch des tragbaren Datenträgers vermieden wird und das Risiko eines unerwarteten Ausfalls des tragbaren Datenträgers reduziert wird.

Die Informationen können unmittelbar ab ihrer Verfügbarkeit an die zentrale Einrichtung übermittelt werden. Dies hat den Vorteil, daß die zentrale Einrichtung sehr zeitnah mit den Informationen versorgt wird. Weiterhin können die Informationen im tragbaren Datenträger gespeichert werden. In diesem Fall besteht die Möglichkeit, die Informationen zeitversetzt an die zentrale Einrichtung zu übermitteln. Die zeitversetzte Übermittlung der Informationen kommt insbesondere dann zur Anwendung, wenn das Netzwerk für den tragbaren Datenträger nicht permanent verfügbar ist und ermöglicht auch bei Systemen mit einem nur temporären Netzwerkzugang einen Einsatz der Erfindung.

Im Rahmen des erfindungsgemäßen Verfahrens können beispielsweise Informationen über einen Fehler beim Lesen oder Beschreiben eines nichtflüchtigen Speichers des integrierten Schaltkreises an die zentrale Einrichtung übermittelt werden. Ebenso besteht auch die Möglichkeit, Informationen über eine vom integrierten Schaltkreis fehlerhaft durchgeführte Operation an die zentrale Einrichtung zu übermitteln.

In einer Weiterbildung des erfindungsgemäßen Verfahrens werden Informationen, die auf einen Eingriff in die Sicherheit des tragbaren Datenträgers schließen lassen an die zentrale Einrichtung übermittelt. Dabei können sich die Informationen beispielsweise auf ein Ansprechen eines Sicherheitsdetektors des tragbaren Datenträgers beziehen. Weiterhin können sich die Informationen auf eine fehlerhafte Authentifizierung oder eine Falscheingabe einer persönlichen Geheimzahl oder eine Verwendung eines Schlüssels zur Aufhebung einer Blockierung des tragbaren Datenträgers beziehen. Auf diese Weise können Angriffe erkannt und lokalisiert werden und dadurch die Sicherheit des tragbaren Datenträgers erhöht werden.

Die übermittelten Informationen können von der zentralen Einrichtung abgespeichert werden. Weiterhin können die übermittelten Informationen von der zentralen Einrichtung ausgewertet werden und abhängig vom Ergebnis der Auswertung dem Inhaber des tragbaren Datenträgers eine Nachricht übermittelt werden. Dabei besteht die Möglichkeit, die Nachricht über das Netzwerk zu übermitteln. Ebenso ist es auch möglich, die Nachricht auf dem Postweg zu übermitteln. Die Nachricht kann beispielsweise eine Aufforderung enthalten, den tragbaren Datenträger auszutauschen.

Das erfindungsgemäße System weist mehrere tragbare Datenträger auf, die jeweils über einen integrierten Schaltkreis zur Speicherung und/oder Verarbeitung von Daten verfügen. Weiterhin weist das erfindungsgemäße System eine zentrale Einrichtung und ein Netzwerk auf, durch das jeweils wenigstens temporär Datenverbindungen zwischen den tragbaren Datenträgern und der zentralen Einrichtung ausgebildet werden. Die Besonderheit des erfindungsgemäßen Systems besteht darin, daß der zentralen Einrichtung von den tragbaren Datenträgern über das Netzwerk jeweils Informationen bezüglich des Funktionszustands des jeweiligen integrierten Schaltkreises übermittelt werden.

Die zentrale Einrichtung kann mit einer Datenbank verbunden sein. Besonders vorteilhaft ist es, wenn die zentrale Einrichtung so ausgebildet ist, daß sie auf Basis der von den tragbaren Datenträgern übermittelten Informationen für jeden tragbaren Datenträger individuell ermittelt, ob ein Austausch erforderlich ist. Dadurch wird es ermöglicht, den Austausch eines jeden einzelnen tragbaren Datenträgers zu einem optimalen Zeitpunkt vorzunehmen.

Die tragbaren Datenträger können als Chipkarten, insbesondere als Sicherheitsmodule für Mobiltelefone ausgebildet sein. Das Netzwerk ist insbesondere als ein Mobilfunknetz ausgebildet.

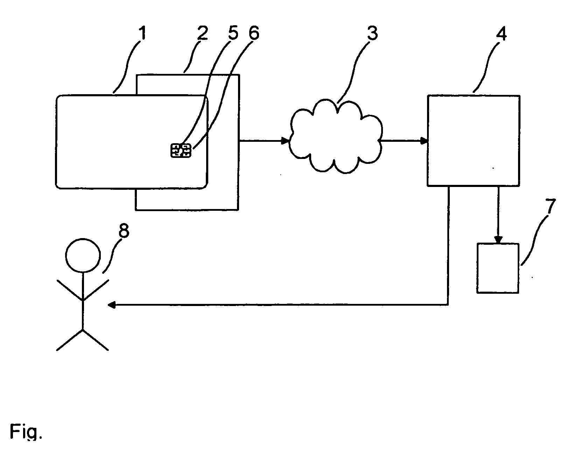

Die Erfindung wird nachstehend anhand des in der Zeichnung dargestellten Ausführungsbeispiels erläutert .

Die einzige Fig. zeigt eine Prinzipdarstellung eines Ausführungsbeispiels der Erfindung. Eine Chipkarte 1, die in einem Endgerät 2 angeordnet ist, steht über ein Netzwerk 3 mit einer zentralen Einrichtung 4 in Datenverbindung. Die Chipkarte 1 weist einen integrierten Schaltkreis 5 auf, der mit einer Kontaktfläche 6 elektrisch verbunden ist. Das Endgerät 2 kann beispielsweise als ein Mobiltelefon ausgebildet sein, in das die Chipkarte 1 als Sicherheitsmodul eingesteckt ist In diesem Fall handelt es sich bei dem Netzwerk 3 um ein Mobilfunknetz. Die zentrale Einrichtung 4 ist mit einer Datenbank 7 verbunden und kann Nachrichten an einen Inhaber 8 der Chipkarte 1 übermitteln. Im dargestellten Ausführungsbeispiel erfolgt die Übermittlung der Nachrichten an den Inhaber 8 der Chipkarte 1 nicht über das Netzwerk 3, sondern beispielsweise per Post Alternativ dazu können die Nachrichten aber auch über das Netzwerk 3, beispielsweise als SMS, übertragen werden. Die Erfindung ermöglicht es, für eine Reihe von Szenarien eine bevorstehende Funktionseinschränkung und insbesondere auch einen bevorstehender Ausfall der Chipkarte 1 vorhersagen. Hierzu wird folgendermaßen vorgegangen:

Der integrierte Schaltkreis 5 der Chipkarte 1 überwacht während seines Betriebs fortwährend, ob ein Ereignis auftritt, das auf eine bevorstehende Funktionseinschränkung oder einen bevorstehenden Ausfall des integrierten Schaltkreises 5 hindeutet Diese Überwachung wird nicht im Rahmen einer lediglich zu diesem Zweck vorgesehen Diagnosefunktion ausgeübt, sondern während des üblichen Anwendungsbetriebs, für den die Chipkarte 1 vorgesehen ist, so daß der integrierte Schaltkreis 5 durch die Überwachung nicht zusätzlich geschädigt wird. Ein in diesem Zusammenhang zu berücksichtigendes Ereignis wird im Folgenden als relevantes Ereignis bezeichnet und kann beispielsweise darin bestehen, daß beim Lesen eines im integrierten Schaltkreis 5 enthaltenen EEPROMs, in dem Daten nichtflüchtig gespeichert werden können, ein Fehler aufgetreten ist. Dabei kann noch zwischen dem Fall, daß der Fehler korrigiert werden konnte und dem Fall, daß der Fehler nicht korrigiert werden konnte, unterschieden werden. Ebenso kann auch ein Problem beim Schreiben auf eine EEPROM-Seite ein relevantes Ereignis darstellen, das sich beispielsweise darin äußert, daß mehrere Schreibversuche erforderlich waren. Auch das Umschalten auf eine neue EEPROM-Seite wegen der Unbrauchbarkeit der aktuell verwendeten EEPROM-Seite kann als relevantes Ereignis gewertet werden. Ein weiteres relevantes Ereignis stellt die Durchführung eines Roll-Back-Mechanismus dar, mit dem die Daten bei einer fehlerhaften oder abgebrochenen Operation rekonstruiert werden. Der Roll-Back Mechanismus kann beispielsweise bei atomaren Schreibzugriffen auf das EEPROM vorgesehen sein. Atomare Schreibzugriffe dürfen entweder vollständig oder überhaupt nicht ausgeführt werden. Eine Teilausführung ist nicht zulässig. Kommt es durch einen Fehler dennoch zu einer Teilausführung, so wird ein dafür vorgesehener Roll-Back-Mechanismus aktiviert

Die relevanten Ereignisse müssen nicht auf Probleme beschränkt sein, die beim EEPROM auftreten, sondern können beispielsweise auch Rechenfehler des integrierten Schaltkreises 5 umfassen, der vorzugsweise als ein Mikroprozessor ausgebildet ist. Derartige Rechenfehler können beispielsweise dadurch erkannt werden, daß aus Sicherheitsgründen manche Abläufe mehrfach berechnet werden und somit eine Abweichung im Ergebnis auf einen Rechenfehler oder eine Manipulation schließen lässt.

Wenn in der Chipkarte 1 ein relevantes Ereignis ermittelt wurde, wird dieses unmittelbar danach über das Netzwerk 3 an die zentrale Einrichtung 4 gemeldet. Die Meldung des relevanten Ereignisses umfasst eine oder mehrere der Angaben Datum, Uhrzeit, Sequenznummer, Kennung des verwendeten Endgeräts 2 usw. Die zentrale Einrichtung 4 speichert das relevante Ereignis in der Datenbank 7 ab, führt eine Auswertung des relevanten Ereignisses durch und reagiert abhängig vom Ergebnis der Auswertung. Wenn die Auswertung beispielsweise ergibt, daß eine erhebliche Funktionsbeeinträchtigung oder sogar ein Ausfall der Chipkarte 1 zu erwarten ist, so leitet die zentrale Einrichtung 4 Maßnahmen ein, um die Chipkarte 1 aus dem Verkehr zu ziehen. Diese Maßnahmen können darin bestehen, daß dem Inhaber 8 der Chipkarte 1 eine Aufforderung übermittelt wird, die Chipkarte 1 auszutauschen. Dabei besteht die Möglichkeit, abhängig von der bei der Auswertung ermittelten Dringlichkeit einen Zeithorizont für das Austauschen der Chipkarte 1 vorzugeben. Wenn der Inhaber 8 der Chipkarte 1 rechtzeitig auf die Aufforderung reagiert, kann die bevorstehende Funktionsbeeinträchtigung bzw. der bevorstehende Ausfall der Chipkarte 1 mit hoher Wahrscheinlichkeit verhindert werden.

In einer Weiterbildung der Erfindung werden nicht nur Ereignisse an die zentrale Einrichtung 4 gemeldet, die im Hinblick auf einen bevorstehenden Ausfall der Chipkarte 1 von Relevanz sind, sondern auch Ereignisse, die auf einen Eingriff in die Sicherheit der Chipkarte 1 hindeuten. Ein derartiges sicherheitsrelevantes Ereignis ist beispielsweise eine falsche Eingabe einer persönlichen Geheimzahl des Inhabers 8 der Chipkarte 1. Ebenso kann gemeldet werden, wenn ein persönlicher Schlüssel zur Aufhebung einer Sperre der Chipkarte 1 benutzt wird, die beispielsweise durch eine mehrmalige Falscheingabe der persönlichen Geheimzahl aktiviert wurde. Auch ein Ansprechen eines Sicherheitsdetektors der Chipkarte 1, das beispielsweise durch eine zu niedrige oder zu hohe Spannung oder Taktfrequenz oder durch eine unzulässige Lichteinwirkung ausgelöst wird, kann an die zentrale Einrichtung 4 weitergemeldet werden. Zudem kann die Meldung an die zentrale Einrichtung 4 auch dadurch ausgelöst werden, daß ein Authentisierungsfehler auftritt. Im Rahmen der Auswertung der an die zentrale Einrichtung 4 gemeldeten sicherheitsrelevanten Ereignisse können Angriffe auf die Chipkarte 1 erkannt und lokalisiert sowie geeignete Gegenmaßnahmen eingeleitet werden.

Die Erfindung bezieht sich nicht nur auf Online-Systeme, bei denen es jederzeit möglich ist, mit der zentralen Einrichtung 4 zu kommunizieren. Auch bei Offline-Systemen kann die Erfindung eingesetzt werden, wenn zeitweise die Möglichkeit besteht, Daten an die zentrale Einrichtung 4 zu übertragen. In diesem Fall werden Informationen über die im Hinblick auf eine bevorstehende Funktionsbeeinträchtigung der Chipkarte 1 oder auf einen Eingriff in die Sicherheit der Chipkarte 1 relevanten Ereignisse in einem Protokollspeicher in der Chipkarte 1 zwischengespeichert, bis eine Datenverbindung zur zentralen Einrichtung 4 verfügbar ist und dann an die zentrale Einrichtung 4 übermittelt. Dabei ist es auch möglich, die Informationen über die relevanten Ereignisse auch nach der Übermittlung an die zentrale Einrichtung 4 weiterhin in der Chipkarte 1 zu speichern. Auch bei den eingangs beschriebenen Online-Systemen können die Informationen über die relevanten Ereignisse in der Chipkarte 1 gespeichert werden. In diesem Fall kann die Übermittlung der Informationen an die zentrale Einrichtung 4 wahlweise unmittelbar nach Auftreten des relevanten Ereignisses oder zu einem späteren Zeitpunkt erfolgen.

## Patentansprüche

1. Verfahren in einem System mit einer zentralen Einrichtung (4) und zumindest einem tragbaren Datenträger (1), der einen integrierten Schaltkreis (5) zur Speicherung und/oder Verarbeitung von Daten aufweist, wobei der tragbare Datenträger (1) über ein Gerät (2), das mit einem Netzwerk (3) verbunden ist, und über das Netzwerk (3) wenigstens zeitweise mit der zentralen Einrichtung (4) in Datenverbindung steht, und wobei der zentralen Einrichtung (4) vom tragbaren Datenträger (1) über das Gerät (2) und über das Netzwerk (3) Informationen bezüglich des Funktionszustands des integrierten Schaltkreises (5) übermittelt werden,
**dadurch gekennzeichnet, daß**
der integrierte Schaltkreis (5) während seines Betriebes überwacht, ob ein relevantes Ereignis auftritt, das auf eine bevorstehende Funktionseinschränkung oder seinen bevorstehenden Ausfall hindeutet, wobei das relevante Ereignis an die zentrale Einrichtung (4) übermittelt wird; und
die zentrale Einrichtung (4) auf Basis der von tragbaren Datenträgern (1) übermittelten Informationen für jeden tragbaren Datenträger (1) individuell ermittelt, ob ein Austausch des tragbaren Datenträgers (1) erforderlich ist.

2. Verfahren nach Anspruch 1, **dadurch gekennzeichnet, daß** die Informationen unmittelbar ab ihrer Verfügbarkeit an die zentrale Einrichtung (4) übermittelt werden.

3. Verfahren nach einem der vorhergehenden Ansprüche, **dadurch gekennzeichnet, daß** die Informationen im tragbaren Datenträger (1) gespeichert werden.

4. Verfahren nach Anspruch 3, **dadurch gekennzeichnet, daß** die Informationen zeitversetzt an die zentrale Einrichtung (4) übermittelt werden.

5. Verfahren nach einem der vorhergehenden Ansprüche, **dadurch gekennzeichnet, daß** Informationen über einen Fehler beim Lesen oder Beschreiben eines nichtflüchtigen Speichers des integrierten Schaltkreises (5) an die zentrale Einrichtung (4) übermittelt werden.

6. Verfahren nach einem der vorhergehenden Ansprüche, **dadurch gekennzeichnet, daß** Informationen, die auf einen Eingriff in die Sicherheit des tragbaren Datenträgers (1) schließen lassen an die zentrale Einrichtung (4) übermittelt werden.

7. Verfahren nach Anspruch 6, **dadurch gekennzeichnet, daß** sich die Informationen auf ein Ansprechen eines Sicherheitsdetektors des tragbaren Datenträgers (1) beziehen.

8. Verfahren nach einem der Ansprüche 6 oder 7, **dadurch gekennzeichnet, daß** sich die Informationen auf eine fehlerhafte Authentifizierung oder eine Falscheingabe einer persönlichen Geheimzahl oder eine Verwendung eines Schlüssels zur Aufhebung einer Blockierung des tragbaren Datenträgers (1) beziehen.

9. Verfahren nach einem der vorhergehenden Ansprüche, **dadurch gekennzeichnet, daß** die übermittelten Informationen von der zentralen Einrichtung (4) abgespeichert werden.

10. Verfahren nach einem der vorhergehenden Ansprüche, **dadurch gekennzeichnet, daß** die übermittelten Informationen von der zentralen Einrichtung (4) ausgewertet werden und abhängig vom Ergebnis der Auswertung dem Inhaber (8) des tragbaren Datenträgers (1) eine Nachricht übermittelt wird.

11. Verfahren nach Anspruch 10, **dadurch gekennzeichnet, daß** die Nachricht über das Netzwerk (3) übermittelt wird.

12. Verfahren nach Anspruch 10, **dadurch gekennzeichnet, daß** die Nachricht auf dem Postweg übermittelt wird.

13. Verfahren nach einem der Ansprüche 10 bis 12, **dadurch gekennzeichnet, daß** die Nachricht eine Aufforderung enthält, den tragbaren Datenträger (1) auszutauschen.

14. System mit mehreren tragbaren Datenträgern (1), die jeweils einen integrierten Schaltkreis (5) zur Speicherung und/ oder Verarbeitung von Daten aufweisen, einem Gerät (2), einer zentralen Einrichtung (4) und einem Netzwerk (3), durch das jeweils wenigstens temporär eine Datenverbindung zwischen einem der tragbaren Datenträger (1) und der zentralen Einrichtung (4) ausgebildet wird, wobei der zentralen Einrichtung (4) von dem tragbaren Datenträger (1) über das Gerät (2) und über das Netzwerk (3) Informationen bezüglich des Funktionszustands des integrierten Schaltkreises (5) übermittelt werden;
**dadurch gekennzeichnet, daß** die integrierten Schaltkreise (5) während ihres Betriebes überwachen, ob ein relevantes Ereignis auftritt, das auf eine bevorstehende Funktionseinschränkung oder ihren bevorstehenden Ausfall hindeutet, wobei das relevante Ereignis an die zentrale Einrichtung (4) übermittelt wird; und
die zentrale Einrichtung (4) so ausgebildet ist, daß sie auf Basis der von den tragbaren Datenträgern (1) übermittelten Informationen für jeden tragbaren Datenträger (1) individuell ermittelt, ob ein Austausch erforderlich ist.

15. System nach Anspruch 14, **dadurch gekennzeichnet, daß** die zentrale Einrichtung (4) mit einer Datenbank (7) verbunden ist.

16. System nach einem der Ansprüche 14 bis 15, **dadurch gekennzeichnet, daß** die tragbaren Datenträger (1) als Chipkarten, insbesondere als Sicherheitsmodule für Mobiltelefone ausgebildet sind.

17. System nach einem der Ansprüche 14 bis 16, **dadurch gekennzeichnet, daß** das Netzwerk (3) als ein Mobilfunknetz ausgebildet ist.

## Claims

1. A method in a system with a central device (4) and at least one portable data carrier (1) having an integrated circuit (5) for storing and/or processing data, wherein the portable data carrier (1) is in a data connection with the central device (4) via a device (2), which is connected with a network (3), and via the network (3), at least temporarily, and wherein information concerning the functional state of the integrated circuit (5) is transmitted from the portable data carrier (1) via the device (2) and via the network (3) to the central device (4),
**characterized in that**
during its operation the integrated circuit (5) monitors, whether a relevant event occurs, which indicates an imminent function restriction or its imminent failure, the relevant event being transmitted to the central device (4); and
the central device (4) determines individually for each portable data carrier (1), on the basis of the information transmitted from portable data carriers (1), whether a replacement of the portable data carrier (1) is required.

2. The method according to claim 1, **characterized in that** the information is transmitted to the central device (4) immediately when available.

3. The method according to any of the above claims, **characterized in that** the information is stored in the portable data carrier (1).

4. The method according to claim 3, **characterized in that** the information is transmitted to the central device (4) in a time-shifted fashion.

5. The method according to any of the above claims, **characterized in that** information about an error on reading or writing a non-volatile memory of the integrated circuit (5) is transmitted to the central device (4).

6. The method according to any of the above claims, **characterized in that** information, which indicates a violation of the security of the portable data carrier (1), is transmitted to the central device (4).

7. The method according to claim 6, **characterized in that** the information relates to a responding of a security detector of the portable data carrier (1).

8. The method according to one of the claims 6 or 7, **characterized in that** the information relates to a faulty authentication or a misentry of a personal PIN or a use of a key for cancelling a blocking of the portable data carrier (1).

9. The method according to any of the above claims, **characterized in that** the transmitted information is stored by the central device (4).

10. The method according to any of the above claims, **characterized in that** the transmitted information is evaluated by the central device (4) and dependent on the result of the evaluation a message is transmitted to the holder (8) of the portable data carrier (1).

11. The method according to claim 10, **characterized in that** the message is transmitted via the network (3).

12. The method according to claim 10, **characterized in that** the message is transmitted by post.

13. The method according to any of claims 10 to 12, **characterized in that** the message includes a request to replace the portable data carrier (1).

14. A system with a plurality of portable data carriers (1), which each have an integrated circuit (5) for storing and/or processing data, a device (2), a central device (4) and a network (3), with the help of which in each case at least temporarily a data connection between one of the portable data carriers (1) and the central device (4) is formed, wherein information concerning the functional state of the integrated circuit (5) is transmitted from the portable data carrier (1) via the device (2) and via the network (3) to the central device (4);
**characterized in that** the integrated circuits (5) monitor during their operation, whether a relevant event occurs, which indicates an imminent function restriction or their imminent failure, the relevant event being transmitted to the central device (4); and
the central device (4) is adapted to determine individually for each portable data carrier (1), on the basis of the information transmitted by the portable data carriers (1), whether a replacement is required.

15. The system according to claim 14, **characterized in that** the central device (4) is connected with a data base (7).

16. The system according to any of claims 14 to 15, **characterized in that** the portable data carriers (1) are formed as chip cards, in particular security modules for mobile phones.

17. The system according to any of claims 14 to 16, **characterized in that** the network (3) is formed as a mobile radio network.

## Revendications

1. Procédé, dans un système comportant un dispositif central (4) et au moins un support de données portable (1), qui présente un circuit intégré (5) pour le stockage et/ou le traitement de données, où le support de données portable (1) communique en liaison de données au moyen d'un appareil (2) qui est connecté à un réseau (3), et au moyen du réseau (3), au moins ponctuellement avec le dispositif central (4) et où des informations concernant l'état de fonctionnement du circuit intégré (5) sont transmises au dispositif central (4) par le support de données portable (1) au moyen de l'appareil (2) et au moyen du réseau (3),
**caractérisé en ce que**
le circuit intégré (5) surveille pendant son fonctionnement si se produit un événement significatif qui laisse présager une restriction de fonctionnement imminente ou sa panne imminente, l'événement significatif étant transmis au dispositif central (4) ; et que
le dispositif central (4) détermine individuellement, sur la base des informations transmises pour chaque support de données portable (1) par les supports de données portables (1), si un remplacement du support de données portable (1) est nécessaire.

2. Procédé selon la revendication 1, **caractérisé en ce que** les informations sont transmises directement, dès leur disponibilité au dispositif central (4).

3. Procédé selon l'une des revendications précédentes, **caractérisé en ce que** les informations sont stockées dans le support de données portable (1).

4. Procédé selon la revendication 3, **caractérisé en ce que** les informations sont transmises en différée au dispositif central (4).

5. Procédé selon l'une des revendications précédentes, **caractérisé en ce que** des informations en cas d'erreur lors de la lecture ou de l'écriture d'une mémoire non volatile du circuit intégré (5) sont transmises au dispositif central (4)..

6. Procédé selon l'une des revendications précédentes, **caractérisé en ce que** des informations, qui laissent supposer une atteinte à la sécurité du support de données portable (1), sont transmises au dispositif central (4).

7. Procédé selon la revendication 6, **caractérisé en ce que** les informations se rapportent à une réaction d'un détecteur de sécurité du support de données portable (1).

8. Procédé selon l'une des revendications 6 ou 7, **caractérisé en ce que** les informations se rapportent à une authentification incorrecte ou à une saisie erronée d'un code confidentiel personnel ou à une utilisation d'une clé pour l'annulation d'un blocage du support de données portable (1).

9. Procédé selon l'une des revendications précédentes, **caractérisé en ce que** les informations transmises sont mémorisées par le dispositif central (4).

10. Procédé selon l'une des revendications précédentes, **caractérisé en ce que** les informations transmises sont analysées par le dispositif central (4), et qu'un message est transmis au propriétaire (8) du support de données portable (1) en fonction du résultat de l'analyse.

11. Procédé selon la revendication 10, **caractérisé en ce que** le message est transmis au moyen du réseau (3).

12. Procédé selon la revendication 10, **caractérisé en ce que** le message est transmis par courrier postal.

13. Procédé selon l'une des revendications 10 à 12, **caractérisé en ce que** le message contient une demande pressante pour remplacer le support de données portable (1).

14. Système comportant plusieurs supports de données portables (1), qui présentent chacun un circuit intégré (5) pour l'enregistrement et/ou le traitement de données, un appareil (2), un dispositif central (4) et un réseau (3) par l'intermédiaire duquel est établie une liaison de données, chaque fois au moins temporairement, entre un des supports de données portables (1) et le dispositif central (4), où des informations concernant l'état de fonctionnement du circuit intégré (5) sont transmises au dispositif central (4) par le support de données portable (1) au moyen de l'appareil (2) et au moyen du réseau (3) ;
**caractérisé en ce que** les circuits intégrés (5) surveillent, pendant leur fonctionnement, si se produit un événement significatif qui laisse présager une restriction de fonctionnement imminente ou leur panne imminente, l'événement significatif étant transmis au dispositif central (4) ; et que
le dispositif central (4) est réalisé de telle sorte qu'il détermine individuellement, sur la base des informations transmises pour chaque support de données portable (1) par les supports de données portables (1), si un remplacement est nécessaire.

15. Système selon la revendication 14, **caractérisé en ce que** le dispositif central (4) est connecté à une base de données (7).

16. Système selon l'une des revendications 14 à 15, **caractérisé en ce que** les supports de données portables (1) sont réalisés sous forme de cartes à puce, en particulier sous forme de modules de sécurité pour des téléphones mobiles.

17. Système selon l'une des revendications 14 à 16, **caractérisé en ce que** le réseau (3) est réalisé sous la forme d'un réseau de téléphonie mobile.
